# EUROPEAN PATENT APPLICATION

(11) **EP 3 686 460 A1**
(43) Date of publication of application: **29.07.2020**
(21) Application number: 19153607.7
(22) Date of filing: 24.01.2019
(51) Int. Cl.: F16H 25/18, F16F 1/04, F16H 25/20

(54) **ACTUATOR FOR A MOTOR VEHICLE**

(71) Applicant: U-Shin Deutschland Zugangssysteme GmbH, 85253 Erdweg (DE)
(72) Inventor: Breitenberger, Peter, 85253 Erdweg (DE)
(74) Representative: Verriest, Philippe

(57) **Abstract**

Actuator extending along an axis A and configured to be connected to a body of a motor vehicle and to an opening panel, said spindle comprising co-axially a guiding pipe 3, a spring cover tube 2, and a helical spring 4 radially located between the guiding pipe 3 and the spring cover tube 2, the Actuator being movably mounted between a closed position in which the helical spring 4 is compressed, and an open position in which the helical spring 4 is at least partially relaxed. The helical compression spring comprising at least a first right hand wound section 4a and a second left hand wound section 4b.

## Description

### Technical Field

The invention relates to an actuator such as a spindle drive or a counter balance spring system for a motor vehicle and corresponding adjusting device for motor vehicles in general.

It is known in the automotive access mechanisms to use an adjusting device or actuator for automatically opening and closing an opening panel such as a trunk of a motor vehicle.

Typically, the actuator is movably mounted between a closed position in which a guide tube is retracted telescopically inside an over-tube, and the opening panel is closed; and an open position in which the guide tube is extended telescopically out of the over-tube and the opening panel is opened.

### Background Art

An actuator of the type above mentioned is known from application US 2003141641 regarding a compression spring rod for relatively displacing elements attached to end mounts of the rod assembly that comprises a housing having a rod member moveable between extended and retracted positions relative thereto, and a first compression spring in the housing surrounded by a second compression spring for biasing the rod member to one of an extended or retracted position relative to the housing. The two springs are oppositely wound, of different length, of different outside diameter, and of different wire diameter whereby, from a compressed condition, the spring rod exerts an expansion force which increases at a linear rate. Two sets of the springs can be arranged for biasing the rod member to a central position relative to the housing.

As background information related to spring mechanisms, it can also be cited the application US 2007001356 dealing with a spring system for relatively displacing elements attached to end mounts of the rod assembly that comprises a housing having a rod member movable between extended and retracted positions relative thereto, and a first spring in the housing surrounded by a second spring for biasing the rod member to one of an extended or retracted position relative to the housing. The two springs exert a non-linear load versus deflection curve as the rod member moves between an extended position and a retracted position

The double nested spring approach of the prior art documents cited increases complexity of already complex actuator systems while increasing the weight. Furthermore, the prior art leads to the problem that, during an opening and closing process of electrically operated tailgate, there are rattling and banging noises within the actuator.

These noises are produced by the rotation of the spring during the compression or decompression phase. The spring tends to rotate in the direction of the winding, supported by the plain bearings that are positioned at the ends of the spring. Rattling noise appears since the rotation of the spring is, due to static friction and changing forces at the spring ends, not a linear movement, but rather a jerky one.

Practically, the discontinuous, pulse-like movement of the spring or springs, causes s-shaped oscillations of said spring(s) whose amplitudes are such that they partly hit against the outer tube and produce undesirable noises.

The invention aims at reducing the noise produced by the spring oscillations.

### Summary of invention

According to the invention, the actuator extends along an axis and is configured to be connected to a body of a motor vehicle and to an opening panel, the actuator comprising co-axially:
- a guiding pipe,
- a spring cover tube,
- a helical spring radially located between said guiding pipe and said spring cover tube,
the actuator being movably mounted between a closed position in which the helical spring is compressed, and an open position in which the helical spring is at least partially relaxed. According to the invention, the helical spring comprises at least a first right hand wound section and a second left hand wound section.

The main invention is therefore to have a one-piece helical compression spring with coupled left-hand wounded and right-hand wounded sections. The opposite winding direction of the spring leads to a compensation of the rotation of the complete spring assembly and therefore no rattling noises can occur at the ends of the spring. Also, the s-shaped movement of the spring can be avoided or significantly reduced so that no unwanted noises can occur.

In preferred embodiments, the actuator according to the invention may comprise:
- a co-axially mounted housing tube surrounding the spring cover.
- a push rod so as push an open panel between a closed position and an open position.
- a drive unit to drive the push rod longitudinally along the axis of rotation of the actuator.
- a drive unit with a motor.
- a first damper located between the drive unit and the housing tube.
- a second damper located on side opposite to the first damper and connected to the drive unit.
- connecting means such as a ball socket at each one of its ends so as to link said actuator to a body of a motor vehicle and to an opening panel.

In a further preferred embodiment there is only one helical spring radially located between said guiding pipe and said spring cover tube.

Alternatively, there might be an embodiment with a plurality of helical springs arranged in series and radially located between said guiding pipe and said spring cover tube. Having a plurality of springs makes it easier to produce the spindle according to the invention.

Preferably, the right hand wound section and the left hand wound section have the same length but it is conceivable to have different lengths for said sections. In any cases, the forces of the used spring(s) must be the same. Having different lengths increases the freedom regarding the design, available space, and assembling process.

The actuator according to the invention can either be a compact spindle drive or a counter balance spring system.

Other objects and features of the present invention will become apparent from the following detailed description considered in conjunction with the accompanying drawings. It is to be understood, however, that the drawings are designed solely for purposes of illustration and not as a definition of the limits of the invention, for which reference should be made to the appended claims. It should be further understood that the drawings are not necessarily drawn to scale and that, unless otherwise indicated, they are merely intended to conceptually illustrate the structures and procedures described herein.

### Brief description of drawings

Figure 1 is an exploded view of an actuator according to the invention.
Figure 2 is a view of a helical spring according to the invention.

### Description of embodiments

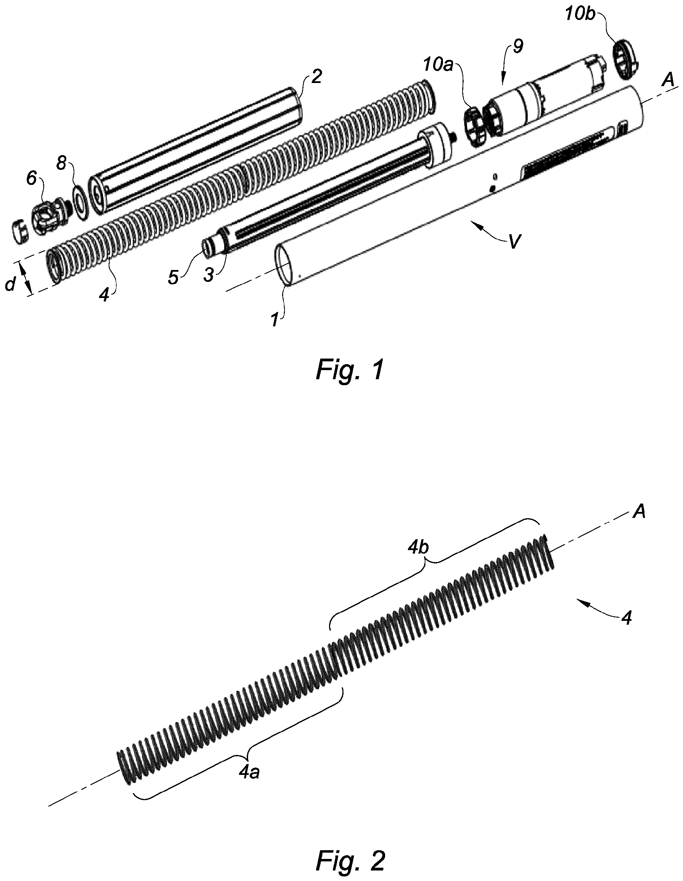

The actuator device illustrated in the figure 1 has a housing tube 1 into which a spring cover tube 2 is mounted in a telescopically displaceable manner.

A ball socket 6 is arranged at the end of the spring cover tube 2 opposite the housing tube 1. The ball sockets are used to connect the actuator device in an articulated manner to a fixed body component of a motor vehicle and to a moveable component of the motor vehicle, which component is designed as an opening panel such as a flap, a door, etc....

A helical coil compression spring 4 comprising a first right hand wound section 4a and a second left hand wound section 4b is arranged in the annular gap between a guiding pipe 3 and the spring cover tube 2. The helical compression spring 4 surrounds the former with a clearance and is supported at its one end by the ball socket 6 and at the other end on a fixed part such as an inward radially extending flange belonging to the housing tube 1 or outwardly extending radial flange belonging to the guiding tube 3.

Inside the guiding pipe 3, there is a threaded pushing rod 5 axially displaceable along axis A and driven by the flexible drive unit 9 comprising a motor for electrically driving the pushing rod 5 and therefore an opening panel from close to opening position and vice versa.

The actuator according the invention may comprise a multi-stage gear inside the drive unit 9 rotatably driven by an electric motor. Precisely, a damper 10a is located between the gear box and the housing tube 1 and a damper 10b is located between the actuator motor and the housing tube 1. In addition, there is a first washer located between the compression spring 4 and the guiding pipe 3 and a second washer located between the spring cover tube 2 and the compression spring 4.

As shown in figure 1 and visible from figure 2, the external diameter d of the helical spring 4 according to the invention is constant but it is not compulsory to have a constant diameter. However, the spring forces have to be equal.

In figure 2, the length of the first right hand wound section 4a and the length of the second left hand wound section 4b are identical but in a another embodiment, such lengths are different. In all cases, the force F4a of the first right hand wound section 4a must be equal to the force F4b of the second left hand wound section 4b.

This figure depicts a helical spring 4 having two sections 4a and 4b. Each section shown being substantially identical the only difference being the winding direction.

Generally speaking: the particular thickness or material of the wire used for the spring according to the invention, the inner and outer diameter of said spring, the number of windings, the length, the winding angle of the spring, and other factors, will be in part dependent on the function and end use of the actuator so as to produce a load/deflection curve that matches the targeted application.

Even though the figures show only one spring, It is also contemplated an embodiment wherein there are multiple helical springs 4, each having oppositely wounded sections, said helical springs being arranged axially one after the other in series.

For the avoidance of any doubt, oppositely wounded sections means sections typically manufactured from spring steel and typically formed by a machinery programmed to form the left hand wound section, then reverse the winding adjacent one end of the left hand wound section to form the right hand wound one, or vice-versa. The angles with reference to a direction perpendicular to the spring 4 axis are equal but opposite.

The coupling element between the different helical springs 4 could be a form-fitted element like a sleeve, bolt, mandrel, and the like as well as a force-fitted or substance bonded element like clamping connections, brazed joint, etc.... A spring, manufactured in one piece of material with different winding sense, is of course possible.

The compression spring according to the invention can be used both with and without coating such as flocking commonly used in actuators such as spindle drive systems for opening doors. The flock is known to reduce the noise in the passenger compartment and helps the sliding of the spring inside its seat.

## Claims

1. Actuator (V) extending along an axis (A), configured to be connected to a body of a motor vehicle and to an opening panel, the actuator (V) comprising co-axially:
- a guiding pipe (3),
- a spring cover tube (2),
- a helical spring (4) radially located between said guiding pipe (3) and said spring cover tube (2),
the actuator (V) being movably mounted between a closed position in which the helical spring (4) is compressed, and an open position in which the helical spring (4) is at least partially relaxed,
**characterized in that** said helical spring (4) comprises at least a first right hand wound section (4a) and a second left hand wound section (4b).

2. Actuator (V) according to claim 1 further comprising a co-axially mounted housing tube (1) surrounding the spring cover (2).

3. Actuator (V) according to claim 1 or 2 further comprising a push rod (5) so as push an open panel between a closed position and an open position.

4. Actuator (V) according to claim 3 further comprising a drive unit (9) to drive the push rod (5) longitudinally along axis (A).

5. Actuator (V) according to claim 4 wherein the drive unit (9) comprises a motor.

6. Actuator (V) according to claim 4 or 5 wherein a first damper (10a) is located between the drive unit (9) and the housing tube (1).

7. Actuator (V) according to claim 6 wherein a second damper (10b) is located on the side opposite to the first damper (10a) and connected to the drive unit (9).

8. Actuator (V) according to anyone of preceding claims comprising connecting means (6) such as a ball socket at each one of its ends so as to link said Actuator (V) to a body of a motor vehicle and to an opening panel.

9. Actuator (V) according to anyone of preceding claims wherein there is only one helical spring radially located between said guiding pipe (3) and said spring cover tube (2).

10. Actuator (V) according to anyone of preceding claims 1 to 8 wherein there is a plurality of helical springs (4) arranged in series and radially located between said guiding pipe (3) and said spring cover tube (2).

11. Actuator (V) according to anyone of preceding claims 1 to 9 wherein the right hand wound section (4a) and the left hand wound section (4b) have the same length.

12. Actuator (V) according to anyone of preceding claims 1 to 9 wherein the right hand wound section (4a) and the left hand wound section (4b) have different lengths.

13. Actuator (V) according to anyone of preceding claims wherein the said actuator is a compact spindle drive or a counter balance spring system.
